# EUROPEAN PATENT SPECIFICATION

(11) **EP 1 532 896 B1**
(45) Date of publication and mention of the grant of the patent: **22.08.2007**
(21) Application number: 04026550.6
(22) Date of filing: 09.11.2004
(51) Int. Cl.: A47B 96/20, B29C 65/50

(54) **Method of continuously producing foldable panels**
Verfahren zur kontinuierlichen Herstellung von faltbaren Platten
Procédé de fabrication en continu de panneaux pliables

(30) Priority: 13.11.2003 EP 03026091
(43) Date of publication of application: 25.05.2005
(73) Proprietor: Isoroy, 94523 Rungis Cedex (FR)
(72) Inventor: Marion, Oliver, 71200 Le Creusot (FR); Kalwa, Dr. Norbert, 32805 Horn-Bad Meinberg (DE); Oldemeyer, Wilhelm, 37079 Göttingen (DE)
(74) Representative: Rehberg Hüppe + Partner

(56) References cited:
- DE-A- 19 804 787
- DE-U- 29 715 787
- FR-A- 2 844 166

## Description

The invention relates to a method of continuously producing foldable panels comprising the steps of arranging two panel parts into a flat side by side configuration; and fixing a flexible tape to the aligned edges of the two panel parts for forming a joint between the two panel parts.

A foldable panel produced according to the invention can be used as a rear panel of a cabinet or any other piece of furniture. It will be typically made of a medium to high density fibreboard. The foldability of the panel being required for reducing the overall dimensions of the panel. This is an important aspect, when the piece of furniture is shipped in parts for assembly at its point of use, because the rear panel typically is that part of a two or multi door cabinet having the biggest dimensions.

### PRIOR ART

The oldest prior art method of producing a foldable panel to be used as a rear panel of a cabinet comprises the steps of cutting a one part panel into two panel parts each having a cut edge; aligning both panel parts to each other so that the cut edges directly abut against each other; and fixing a tape to the back sides of the panel parts across their cut edges. The tape forms a joint between the two panel parts about which they may be folded together into a flat side by side configuration. The main disadvantage of this known method is that the front sides of the parts of the panel which may also be called their good sides are exposed to the outside in the folded panel. Thus, they may be easily damaged during transportation of the folded panel.

A method of continuously producing foldable panels is known from EP 0 759 839 A which comprises the steps of cutting two grooves from diametrically opposing direction into the front side and the back side of a panel which is thus cut into two parts; and providing an adhesive in at least one of the grooves which holds the two panel parts together and forms a joint between the two panel parts about which they may be folded together. If the dimensions of the grooves are selected appropriately, the two panel parts may be folded together into a flat side by side configuration with their back sides being exposed to the outside of the folded panel, i.e. with their good sides being protected in between. The foldable panel produced according to this method has two main drawbacks. At first the groove in the front side which typically is that one provided with the adhesive is visible at the good side of the unfolded panel. At second, it is a complicated procedure to provide a sufficient amount of adhesive in the groove to securely hold together the two panel parts of the panel and to form a lasting joint between them on the one hand, and not to use too much adhesive on the other hand which may not only raise the production cost but also result in adhesive spots on the good side of the parts of the panel or even into gluing together the good sides of the parts in the folded panel. Further, the adhesive has to be an expensive special adhesive as it would otherwise tend to separate from the parts of the panel to be held together or to break upon folding the parts of the panel together.

From DE 297 15 787 U a foldable panel is known which consists of two parts which are held together by means of a flexible tape forming a joint between the two panel parts. While the flexible tape is fixed to the two parts of the panel from their back sides, the axis of the joint formed by the flexible tape is arranged in the planes of the good sides of the parts of the panel. To this end, the flexible tape covers the aligned edges of the two parts of the panel. No method of producing this foldable panel is disclosed in DE 297 15 787 U.

A method of continuously producing foldable panels constituting the closest prior art to the present invention is disclosed in DE 198 04 787 A. The known method comprises the steps of cutting a one part panel having a pair of opposing straight edges and a pair of opposing untrimmed edges perpendicularly to the straight edges into two panel parts each having a cut edge; folding the two panel parts together into a flat side by side configuration with the good sides of the panel parts of the panels front to front; aligning the cut edges to each other; releasably fastening the two panel parts together; shaping the untrimmed edges opposing the cut edges at each of the two panel parts; and fixing a flexible tape to the shaped edges for forming a joint between the two panel parts. The steps of fastening the two panel parts and shaping the untrimmed edges allows for a very precise shape of the shaped edges which are then covered by the flexible tape. However, the known method is quite laborious and cost-insensitive because of these two special steps which also require special equipment.

### PROBLEM OF THE INVENTION

It is the problem of the present invention to provide a method of continuously producing foldable panels which may be carried out at low cost, i.e. within a particular low number of single steps, and with standard equipment, but which nevertheless results in high quality foldable panels.

### SUMMARY OF THE INVENTION

The problem of the invention is solved by a method of continuously producing foldable panels according to claim 1. A complete embodiment of the new method resulting in ready to use foldable panels is defined in claim 2. Preferred embodiments of the new method are described in claims 4 to 13. A highly interesting intermediate product of the new methods which is resulting from the method according to claim 1 is defined in claim 14.

### DESCRIPTION OF THE INVENTION

In the first new method the flexible tape is simply fixed to that edges that have been shaped by trimming the untrimmed edges of the one part panels. Thus, the new method does without any separate shaping step for shaping the edges prior to fixing the flexible tape to the edges. Each of the edges to which the flexible tape is fixed is only processed once, i.e. trimmed. If the edges are shaped by milling, this milling step is the trimming step. Further, in the new method, at least for shaping the edges to which the flexible tape is applied, no panel parts or one part panels are fastened to each other. A step of fastening is not necessary here, because no unbalanced forces the one part panels occur in the step of trimming. Further, in all preferred embodiments of the new method, there is also no fastening of the one part panels during the further method steps, either. Surprisingly, the new method nevertheless provides for high quality foldable panels, if the edges are trimmed precisely which is easily done within the possibilities of the state of the art of trimming high density fibreboards, for example. The new method is particularly suitable for being implemented in high output continuous production lines in which the single steps of the new method are carried out in a fast sequence with regard to a particular pair of two one part panels.

As compared to the closest prior art the implementation of the new method avoids any special equipment required for fastening the two one part panels prior to shaping their edges. The method of the invention can be carried out with simple dogs forwarding the one part panels and the panel parts, and automatically aligning them for all method steps. This results in huge cost savings.

The new method has the particular advantage that it is not required to align the untrimmed edges of the two one part panel with any precision. The step of simultaneously trimming these edges at both sides of the one part panels results in the necessary alignment of the trimmed edges, even if the only guidance for the one part panels are simple dogs used for forwarding the one part panels.

The new method may be interrupted after fixing the flexible tapes to the trimmed edges, and the final step of simultaneously cutting the two one part panels into two panel parts each may be carried out later. Thus, the intermediate product consisting of two one part panels joint at their opposing trimmed edges via the flexible tapes may be stored for later use and cutting according to actually required dimensions. This later cutting may be effected at a furniture production site instead of at a production site for foldable panels. This can be a big advantage with smaller production numbers and changing sizes of the required foldable panels.

In the new method the two one part panels can not only be cut in the middle into two panel parts of the same size. Instead, the new method may be used to produce foldable panels of two different sizes at the same time. By means of suitably combining these different sizes a yield of foldable panels produced from a certain amount of panel material can be increased. Further, the intermediate product of the new method may also be cut twice perpendicularly to its straight edges, and the foldable panels resulting may additionally be cut perpendicularly to their joint to produce two foldable panels with desired dimensions which are smaller but otherwise independently of the dimensions of the intermediate product.

In the new method, the flexible tape may be fixed to the cut or trimmed edges only so that it is not covering portions of the main sides of the two one part panels. This embodiment of the new method is easily implemented by means of a standard edge coating apparatus in which the panel parts or the one part panels are arranged one above the other. A standard edge coating apparatus is typically provided with cutting means for cutting away any segments of the coating applied to the edges which are protruding over the edges. This results in a high quality appearance of the tape fixed to the cut or trimmed edges by means of a standard edge coating apparatus.

In another embodiment of the new method, the flexible tape is both fixed to the trimmed edges and neighboring stripes of the main sides of the two panel parts or the two one part panels. This embodiment of the new method is easily implemented by means of a standard profile coating apparatus.

In the new method, the trimmed edges will typically be oriented at right angles with regard to the main sides of the respective panel. This is the case, for example, if the edges are trimmed with a standard saw. With the new method the simultaneous trimmed edges will automatically be in one common plane before the flexible tape is fixed. Two trimmed edges in one common plane is a particularly easy configuration for the application of the flexible tape by means of an edge coating apparatus.

In the new method, it is also possible that the edges are each shaped into a profile at least partially running at an inclined angle with regard to the main sides of the panel. This may be accomplished by using a special saw for trimming the edges of the raw panels. For a more precise profiling of the trimmed edges, however, a milling machine using a special tool may be used for for trimming the edges of the raw panels, instead of a saw. The profile of the cut edges may then be determined by the outer shape of the special tool, i.e. milling cutter used.

The flexible tape used in the new method may comprise cellulose fibres running in the direction of the width of the tape. Cellulose fibres are sufficiently strong to be used as the reinforcing portion of the flexible tape. This is a big advantage as the whole foldable panel inclusive of the flexible tape can thus be based on cellulose fibres which are also the main part of high density fibreboards, for example.

Particularly, the flexible tape may be a gauze tape. However, other materials based on cellulose or other fibres like, for example, paper, woven and nonwoven, and man made foils may also be used.

An adhesive for fixing the flexible tape to the trimmed edges may, for example, be provided on the flexible tape, and it may be activated by being heated up. Heating up the adhesive may be accomplished by direct contact with a hot surface, by infra red light, by micro wave radiation and the like. Particularly, the adhesive may be a so-called hotmelt. Examples of hotmelts include PA, EVA, APAO and PUR.

The visibility of the joint between the two panel parts of the foldable panel produced according to the method of the present invention is particularly low, if the flexible tape and any visible amounts of adhesive provided on it do not differ in colour from the neighboring main sides at the front of the unfolded panel.

### SHORT DESCRIPTION OF THE DRAWINGS

In the following, the invention will be further described and explained by means of an embodiment example and with reference to the accompanied drawings. Prior to that another method of producing foldable panels not belonging to the claimed invention will be described also with reference to the drawings in which:
- **Fig. 1**: illustrates the step of cutting a panel into two panel parts of a first embodiment of the other new method not belonging to the claimed invention.
- Fig. 2: illustrates the step of folding together the two panel parts cut according to Fig. 1.
- Fig. 3: illustrates the step of aligning the cut edges of the two panel parts folded together according to Fig. 2.
- Fig. 4: illustrates the step of fixing a flexible tape to the cut edges aligned according to Fig. 3 viewing onto the aligned cut edges.
- Fig. 5: illustrates the step of fixing a flexible tape to the cut edges aligned according to Fig. 3 laterally viewing along the aligned cut edges.
- Fig. 6: shows the unfolded foldable panel produced according to the embodiment of the other method comprising the steps illustrated in Figs. 1 to 4.
- **Fig. 7**: illustrates the step of cutting a panel into two panel parts of a second embodiment of the other method not belonging to the claimed invention.
- **Fig.** 8: illustrates the steps of folding together the two panel parts cut according to Fig. 7, and of aligning their cut edges.
- **Fig. 9**: illustrates the step of fixing a flexible tape to the cut edges aligned according to Fig. 8.
- Fig. 10: shows an unfolded foldable panel produced according to the embodiment of the other method shown in Figs. 7 to 9.
- Fig. 11: illustrates the steps of simultaneously trimming the untrimmed edges of two one part panels and of fixing a flexible tape to the simultaneously trimmed edges of an embodiment of the new method according to the claimed invention in a side view.
- Fig. 12: is a top view corresponding the side view of Fig. 11.
- Fig. 13: is a top view illustrating the step of cutting the two one part panels of resulting from the steps of Figs. 11 and 12 into two folding panels.
- Fig. 14: shows a partial cross section through one folding panel resulting from the step of Fig. 13; and
- Fig. 15: shows the folding panel according to Fig. 14 in an unfolded state.

### DETAILED DESCRIPTION OF THE EMBODIMENT EXAMPLES

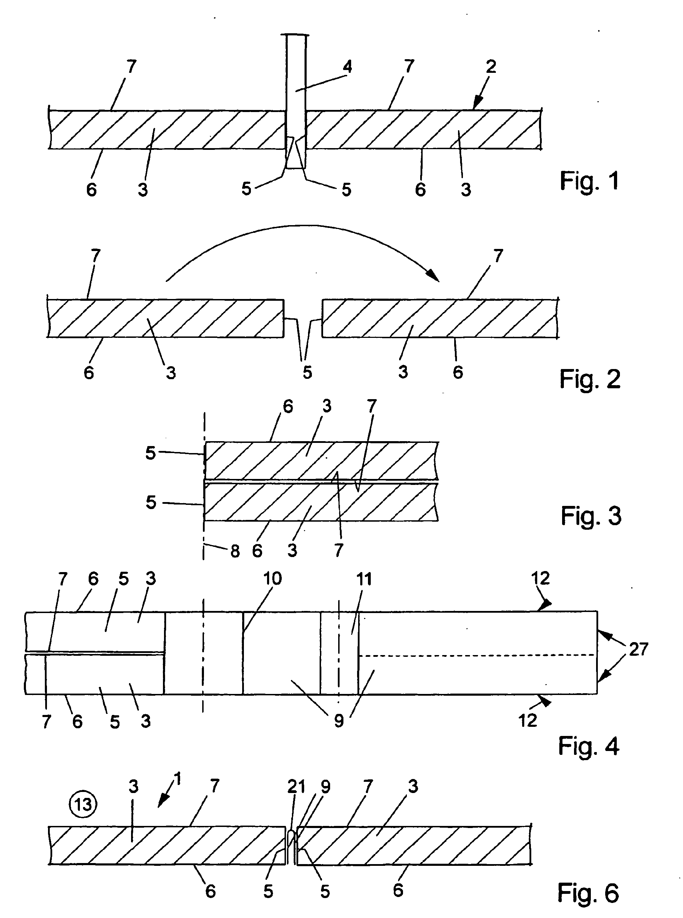

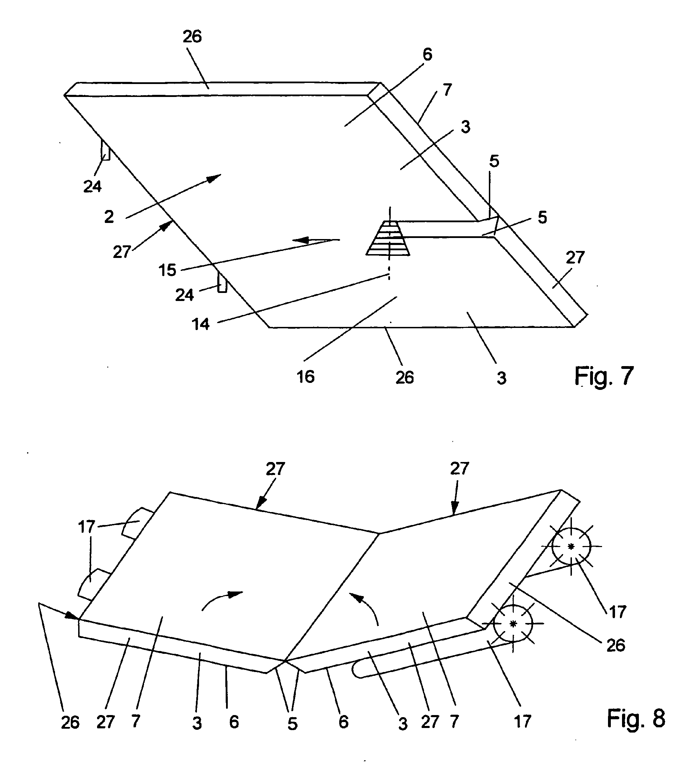

Figs. 1 to 5 show one embodiment of a method of producing a foldable panel 1 not belonging to the claimed invention which is shown in Fig. 6. The method starts from a one part panel 2, which may, for example, be made of HDF, MDF, plywood or a thin chipboard and which may, see Figs. 7 and 8, have a pair of two opposing straight edges 27 resulting from dividing-up an endless material strip into single panels, and a pair of two opposing untrimmed edges remaining from the production of the material stripe. In a first step shown in **Fig. 1,** the one part panel 2, is cut in two panel parts 3. The step of cutting is accomplished by means of a saw 4 shaping straight cut edges 5 at the panel parts 3 which are at right angles with regard to the main sides 6 and 7 of the panel 2. The main side 6 is an uncoated side of the panel. The main side 7 is a lacquered side, for example. It may form the front side of the foldable panel 1 according to Fig. 6, when the foldable panel 1 is used as the rear panel of a cabinet, and it is the so-called good side of the panel.

**Fig. 2** illustrates the step of folding together the two panel parts 3 with their main sides 7 in between. Thus, these main sides 7 are protected between the panel parts 3.

This may be seen from **Fig. 3** illustrating the step of aligning the cut edges 5 within one common plane 8 while the panel parts 3 are in a flat side by side configuration. In this configuration the main side 7 of one panel part 3 lays on top of the main side 7 of the other panel part 3, both panel parts being oriented horizontally.

In a next step, which is shown in **Figs. 4 and 5** from two different points of view, a flexible tape 9 is fixed to the aligned cut edges 5. This step may be accomplished by means of a standard edge coating apparatus in which the flexible tape 9 is drawn from a storage wheel 10 and pressed against the aligned edges 5 by means of a roller 11. Fig. 4 does not show any detail with regard to the flexible tape 9 and an adhesive which is used to fix the tape 9 to the cut edges 5. The tape 9 is preferably thin but strong and flexible, and may, for example, be made of paper, foil, woven or nonwoven. Suitable foils may be made of PE or PP. A flexible tape 9 based on cellulose fibres is preferred. A gauze tape is particularly suitable. The adhesive may, for example, be provided on the flexible tape 9 and be activated by means of heat, i.e. it may be a so called hotmelt. Examples of hotmelts include PA, EVA, APAO and PUR. After the flexible tape 9 has been fixed to the cut edges, any portions of the flexible tape 9 which are protruding over the cut edges 5 are cut away by cutting means 12 which are elements of a standard edge coating apparatus.

The reasons why a thin and flexible tape 9 is required may be seen from Fig. 6 showing the unfolded foldable panel produced according to the method illustrated in Figs. 1 to 4. The unfolded foldable panel 1 comprises two layers of the flexible tape 9 between the panel parts 3, i. e. between their cut edges 5, because the flexible tape 9 is bent about a joint 21 into an U-shape here. If the tape 9 is both highly flexible and thin, it is hardly visible. I.e. it does not result in an easy visible joint 21 between the two panel parts 3. This is particularly the case, if the flexible tape 9 and any visible amounts of adhesive provided on it do not differ in colour from the neighboring main sides 7 at the front 13 of the unfolded panel 1.

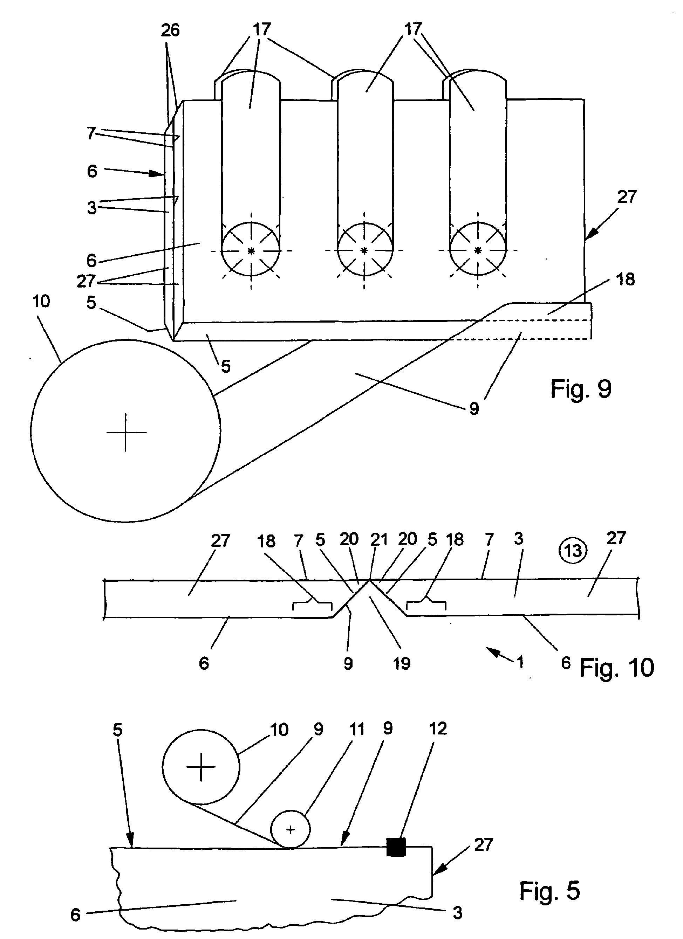

The embodiment of the method of producing foldable panels not belonging to the claimed invention illustrated in Figs. 7 to 9 results into the foldable panel 1 which is shown unfolded in Fig. 10. **Fig. 7** shows how a horizontally oriented one part panel 2 is cut from underneath into two panel parts 3 by means of a rotating milling cutter 14 moving through the panel 2 in a direction 15. The shape of the milling cutter 14 results into the shape of the cut edges 5 which are inclined with regard to the main sides 6 and 7 of the panel 2, but which are nevertheless still symmetric with regard to a cutting plane defined by the rotating axis 16 of the milling cutter 14 moving in the direction 15. The movement of the milling cutter 14 is effected by moving the panel 2 with regard to the stationary milling cutter 14 by means of dogs 24 abutting against a straight edge 27 of the one part panel 2. The dogs 24 also provide for the correct orientation of the forwarded one part panel 2 with regard to the milling cutter 14 so that the cut edges 5 are perpendicular to the straight edges 27 of the one part panel 2.

**Fig. 8** shows how the panel parts 3 cut according to Fig. 7 are folded together about their cut edges 5 into a flat side by side configuration. This is accomplished by guiding rollers 17 with an increasing inclination with regard to the horizontal plane. Again, the panel parts 3 are folded together in such a way that their good sides 7 abut against each other, but here the panel parts are vertically oriented.

**Fig. 9** shows the panel parts 3 folded together and held by vertical guiding rollers 1**7** in an upright orientation. In this upright orientation of the panel parts 3 their cut edges 5 are aligned at their lower ends. Here, the flexible tape 9 is fixed to the aligned cut edges by means of a profile coating apparatus which is not shown in detail, here. The flexible tape 9 is drawn from a storage wheel 10 and applied to the cut edges 5 and neighboring stripes 18 of the main sides 6 of the panel parts 3. The width of the stripes 18 may typically be in the range of 1 to 3 cm. Prior to the application of the flexible tape 9 to the cut edges 5 and the stripes 18 a hotmelt adhesive provided on the flexible tape 9 is activated. The details of the flexible tape 9 and of the adhesive used may be the same as described with regard to Figs. 4 and 5.

In the unfolded foldable panel shown in **Fig. 10** the flexible tape 9 is not compressed between the cut edges 5. Nevertheless the portion of the flexiple tape visible from the front 13 is even smaller than in the embodiment of Fig. 6. The shape of the cut edges 5 provides for a V-shaped groove 19 between the panel parts 3 in which the flexible tape 9 is contained. The points 20 of the cut edges 5 are weaker here than in that embodiment of the foldable panel according to Fig. 6. As long as the foldable panel 1 is folded, however, these points 20 are both stabilized by each other and by the flexible tape 9 covering the points 20.

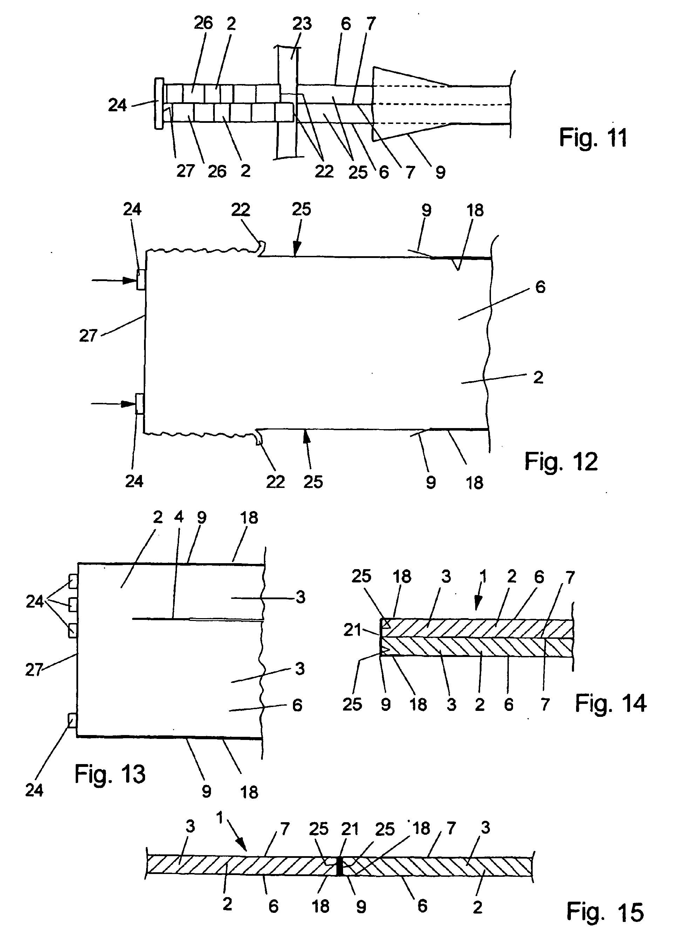

The embodiment of the new method of the invention illustrated in Figs. 11 to 13 results into two foldable panels 1 one of which is shown folded in Fig. 14 and unfolded in Fig. 15. **Figs. 11 and 12** show, how two one part panels 2 both of which have one pair of opposing straight edges 27 and one pair of opposing untrimmed edges 26 are arranged in a flat side by side configuration in which the one part panels 2 enclose their good sides 7. One straight edge 27 of one one part panel 2 is aligned with one straight edge 27 of the other one part panel 2 by means of dogs 24 forwarding both one part panels 2 through the various method steps. In a first of these method steps the untrimmed edges 26 of both one part panels 2 are trimmed with a trimmer 23 removing excess material 22 extending over the nominal width of the one part panels 2. The resulting trimmed edges 25 are straight and run at right angles with regard to the main side 6, 7 of the one part panels 2. One flexible tape 9 is fixed to each pair of simultaneously trimmed edges 25 which are perfectly aligned because of their simultaneous trimming. The step of fixing the flexible tape 9 corresponds to that one shown in Fig. 9 besides the fact that the one part panels are horizontally oriented in the present embodiment of the new method. The intermediate product resulting from the steps shown in Figs. 11 and 12 comprises two one part panels 2 jointed at both of their opposing trimmed edges 25.

In the step shown in **Fig. 13,** the two one part panels 2 are simultaneously cut in two panel parts 3 each, the two panel parts 3 jointed via their trimmed edges 25 forming one of two folding panels 1.

The details of the folding panels 1 resulting from the step shown in Fig. 13 are found in **Figs. 14 and 15**. Here, it becomes apparent again that the flexible tape 9 forming the joint 21 both covers the trimmed edges 25 and neighboring stripes of the main sides 6 of the panel parts 3. In the unfolded folding panel 1 the flexible tape 9 extends between the trimmed edges 25 of both panel parts 3 facing each other over the joint 21.

In the method according to Figs. 11 to 13 every edge 5, 25 and 27 is only cut, milled or trimmed once. Additionally the trimming and cutting according to Figs. 11 and 13 is always effected simultaneously for two one part panels 2. Thus, the new method requires the lowest possible number of cutting and milling steps for producing foldable panels 1.

### LIST OF REFERENCE NUMERALS

- 1: foldable panel
- 2: panel
- 3: panel part
- 4: saw
- 5: cut edge
- 6: main side
- 7: main side/lacquered good side
- 8: plane
- 9: flexible tape
- 10: storage wheel
- 11: roller
- 12: cutting means
- 13: front
- 14: milling cutter
- 15: direction
- 16: rotating axis
- 17: guiding roller
- 18: stripe
- 19: groove
- 20: point
- 21: joint
- 22: excess material
- 23: trimmer
- 24: dog
- 25: trimmed edge
- 26: untrimmed edge
- 27: straight edge

## Claims

1. A method of continuously producing foldable panels (1) comprising the steps of:
- arranging two one part panels (2) each having a pair of opposing straight edges (27) and a pair of opposing untrimmed edges (26) into a flat side by side configuration;
- aligning one straight edge (27) of the one one part panel (2) with one straight edge of the other one part panel (2);
- trimming the untrimmed edges (26) of both one part panels (2) simultaneously; and
- fixing a flexible tape (9) to each of the two opposing pairs of simultaneously trimmed edges (25) of both one part panels (2) for forming two joints (21) between the two one part panels (2).

2. The method of claim 2, further comprising the step of
- cutting the two jointed one part panels (2) perpendicularly to the straight edges (27) into two folding panels (1).

3. The method of claim 1 or 2, **characterized in that** the one part panels (2) are forwarded by dogs (24) abutting against one of their straight edges (27).

4. The method of any of the claims 1 to 3, **characterized in that** the two one part panels (2) are arranged into the flat side by side configuration with their good sides (7) abutting against each other.

5. The method of any of the claims 1 to 4, **characterized in that** the flexible tape (9) is fixed to the edges (5), only, and not covering portions of the main sides (6, 7) of the two one part panels (2).

6. The method of claim 5, **characterized in that** the flexible tape (9) is fixed by means of a standard edge coating apparatus.

7. The method of any of the claims 1 to 6, **characterized in that** the flexible tape (9) is fixed to the edges (5) and neighboring stripes (18) of the main sides (6) of the two one part panels (22).

8. The method of any of the claims 1 to 7, **characterized in that** the flexible tape (9) is fixed by means of a standard profile coating apparatus.

9. The method of any of the claims 1 to 8, **characterized in that** the trimmed edges (25) have a symmetric shape with regard to a cutting plane.

10. The method of claim 9, **characterized in that** the trimmed edges (25) are oriented at right angles with regard to the main sides (6, 7) of the respective panel (2) and aligned into one common plane (8).

11. The method of any of the claims 1 to 10, **characterized in that** the trimmed edges (25) are each at least partially running at an inclined angle with regard to the main sides (6, 7) of the respective panel (2).

12. The method of any of the claims 1 to 11, **characterized in that** the flexible tape (9) comprises cellulose fibers running in the direction of the width of the flexible tape (9).

13. The method of claim 12, **characterized in that** the flexible tape (9) is a gauze tape.

14. An intermediate product for the production of foldable panels comprising two one part panels arranged in a flat side by side configuration, the panels having two opposing pairs of simultaneously trimmed edges, a flexible tape being fixed to the trimmed edges of each of these two pairs.

## Patentansprüche

1. Verfahren zur kontinuierlichen Herstellung von faltbaren Platten (1) mit den Schritten:
- Anordnen von zwei einteiligen Platten (2), die jeweils ein Paar voneinander gegenüberliegenden geraden Kanten (27) und ein Paar von einander gegenüberliegenden nicht zugeschnittenen Kanten (26) aufweisen, nebeneinander in eine flache Konfiguration;
- Ausrichten einer geraden Kante (27) der einen einteiligen Platte (2) mit einer geraden Kante der anderen einteiligen Platte (2);
- Zuschneiden der nicht zugeschnittenen Kanten (26) beider einteiligen Platten (2) gleichzeitig; und
- Befestigen eines flexiblen Bands (9) an jedem der beiden einander gegenüberliegenden Paare von gleichzeitig zugeschnittenen Kanten (25) von beiden einteiligen Platten (2) um zwei Verbindungen (21) zwischen den beiden einteiligen Platten (2) auszubilden.

2. Verfahren nach Anspruch 2, das weiterhin den Schritt aufweist
- Zerschneiden der beiden miteinander verbundenen einteiligen Platten (2) senkrecht zu den geraden Kanten (27) in zwei faltbare Platten (1).

3. Verfahren nach Anspruch 1 oder 2, **dadurch gekennzeichnet, dass** die einteiligen Platten (2) durch Anschläge (24) gefördert werden, die sich gegen eine ihrer geraden Kanten (27) abstützen.

4. Verfahren nach einem der Ansprüche 1 bis 3, **dadurch gekennzeichnet, dass** die zwei einteiligen Platten so nebeneinander in die flache Konfiguration angeordnet werden, dass ihre guten Seiten (27) aneinander liegen.

5. Verfahren nach einem der Ansprüche 1 bis 4, **dadurch gekennzeichnet, dass** das flexible Band (9) nur an den Kanten (5) befestigt wird und keine Bereiche der Hauptseiten (6, 7) der beiden einteiligen Platten (2) abdeckt.

6. Verfahren nach Anspruch 5, **dadurch gekennzeichnet, dass** das flexible Band (9) mit Hilfe einer Standardkantenbeschichtungsvorrichtung befestigt wird.

7. Verfahren nach einem der Ansprüche 1 bis 6, **dadurch gekennzeichnet, dass** das flexible Band (9) an den Kanten (5) und benachbarten Streifen (18) der Hauptflächen (6) der beiden einteiligen Platten (22) befestigt wird.

8. Verfahren nach einem der Ansprüche 1 bis 7, **dadurch gekennzeichnet, dass** das flexible Band (9) mit Hilfe einer Standardprofilbeschichtungsvorrichtung befestigt wird.

9. Verfahren nach einem der Ansprüche 1 bis 8, **dadurch gekennzeichnet, dass** die zugeschnittenen Kanten (25) eine symmetrische Form bezüglich einer Schnittebene aufweisen.

10. Verfahren nach Anspruch 9, **dadurch gekennzeichnet, dass** die zugeschnittenen Kanten (25) unter rechten Winkeln bezüglich der Hauptflächen (6, 7) orientiert und in eine gemeinsame Ebene (8) ausgerichtet sind.

11. Verfahren nach Anspruch 10, **dadurch gekennzeichnet, dass** die zugeschnittenen Kanten (25) zumindest teilweise unter einem geneigten Winkel bezüglich der Hauptflächen (6, 7) der jeweiligen Platte (2) verlaufen.

12. Verfahren nach einem der Ansprüche 1 bis 11, **dadurch gekennzeichnet, dass** das flexible Band (9) Cellulosefasern aufweist, die in der Richtung der Breite des flexiblen Bands (9) verlaufen.

13. Verfahren nach Anspruch 12, **dadurch gekennzeichnet, dass** das flexible Band (9) ein Gaze-Band ist.

14. Zwischenprodukt für die Herstellung von faltbaren Platten, das zwei einteilige Platten aufweist, die nebeneinander in einer flachen Konfiguration angeordnet sind, wobei die Platten zwei einander gegenüberliegende Paare von gleichzeitig zugeschnittenen Kanten aufweisen, wobei ein flexibles Band an den zugeschnittenen Kanten jedes dieser beiden Paare gemäß dem Verfahren, wie es in einem der Ansprüche 1 bis 13 definiert ist, befestigt ist.

## Revendications

1. Procédé de fabrication en continu de panneaux pliables (1), comprenant les étapes consistant à :
agencer deux panneaux d'un seul tenant (2) ayant chacun une paire de bords droits (27) opposés et une paire de bords non rognés (26) opposés dans une configuration plate côte à côte ;
aligner un bord droit (27) de l'un des panneaux d'un seul tenant (2) avec un bord droit de l'autre panneau d'un seul tenant (2) ;
couper les bords non rognés (26) des deux panneaux d'un seul tenant (2) simultanément ; et
fixer une bande flexible (9) sur chacune des paires opposées de bords (25) simultanément coupés des deux panneaux d'un seul tenant (2) pour former deux joints (21) entre les deux panneaux d'un seul tenant (2).

2. Procédé selon la revendication 2, comprenant en outre l'étape consistant à :
couper les deux panneaux d'un seul tenant (2) assemblés perpendiculairement aux bords droits (27) en deux panneaux pliés (1).

3. Procédé selon la revendication 1 ou 2, **caractérisé en ce que** les panneaux d'un seul tenant (2) sont avancés par des doigts d'entraînement (24) en butée contre l'un des bords droits (27).

4. Procédé selon l'une quelconque des revendications 1 à 3, **caractérisé en ce que** les deux panneaux d'un seul tenant (2) sont agencés selon la configuration plate côte à côte avec leurs bons côtés (7) en butée l'un contre l'autre.

5. Procédé selon l'une quelconque des revendications 1 à 4, **caractérisé en ce que** la bande flexible (9) est fixée sur les bords (5), uniquement et ne recouvre pas les parties des côtés principaux (6, 7) des deux panneaux d'un seul tenant (2).

6. Procédé selon la revendication 5, **caractérisé en ce que** la bande flexible (9) est fixée au moyen d'un appareil de revêtement de bord classique.

7. Procédé selon l'une quelconque des revendications 1 à 6, **caractérisé en ce que** la bande flexible (9) est fixée sur les bords (5) et les rebords (18) voisins des côtés principaux (6) des panneaux d'un seul tenant (22).

8. Procédé selon l'une quelconque des revendications 1 à 7, **caractérisé en ce que** la bande flexible (9) est fixée au moyen d'un appareil de revêtement de profil classique.

9. Procédé selon l'une quelconque des revendications 1 à 8, **caractérisé en ce que** les bords coupés (25) ont une forme symétrique par rapport à un plan de coupe.

10. Procédé selon la revendication 9, **caractérisé en ce que** les bords coupés (25) sont orientés en angle droit par rapport aux côtés principaux (6, 7) du panneau (2) respectif et alignés dans un plan (8) commun.

11. Procédé selon l'une quelconque des revendications 1 à 10, **caractérisé en ce que** les bords coupés (25) s'étendent chacun au moins partiellement selon un angle incliné par rapport aux côtés principaux (6, 7) du panneau (2) respectif.

12. Procédé selon l'une quelconque des revendications 1 à 11, **caractérisé en ce que** la bande flexible (9) comprend des fibres de cellulose s'étendant dans la direction de la largeur de la bande flexible (9).

13. Procédé selon la revendication 12, **caractérisé en ce que** la bande flexible (9) est une bande de gaze.

14. Produit intermédiaire pour la production de panneaux pliables comprenant deux panneaux d'un seul tenant agencés selon une configuration plate côte à côte, les panneaux ayant deux paires opposées de bords coupés simultanément, une bande flexible qui est fixée sur les bords coupés de chacune de ces deux paires, selon le procédé défini selon l'une quelconque des revendication 1 à 13.
